Europäisches Patentamt

European Patent Office

Office européen des brevets

(19)

(11) Veröffentlichungsnummer: **0 130 272**
**B1**

(12) # EUROPÄISCHE PATENTSCHRIFT

(45) Veröffentlichungstag der Patentschrift:
04.06.86

(51) Int. Cl.⁴: **C 09 C 1/20**

(21) Anmeldenummer: **84101106.7**

(22) Anmeldetag: **03.02.84**

(54) Temperaturstabile Bleichromat-Pigmente und Verfahren zu ihrer Herstellung.

(30) Priorität: **28.06.83 DE 3323247**

(43) Veröffentlichungstag der Anmeldung:
**09.01.85 Patentblatt 85/2**

(45) Bekanntmachung des Hinweises auf die Patenterteilung:
**04.06.86 Patentblatt 86/23**

(84) Benannte Vertragsstaaten:
**BE DE FR GB IT NL**

(56) Entgegenhaltungen:
**BE - A - 701 910**
**GB - A - 416 744**

(73) Patentinhaber: **BASF Farben + Fasern Aktiengesellschaft, Am Neumarkt 30, D-2000 Hamburg 70 (DE)**

(72) Erfinder: **Liedek, Egon, Dr. Dipl. Chem., Holunderweg 16, D-7300 Esslingen (DE)**
Erfinder: **Knittel, Helmut, Dr. Dipl. Chem., Heilbronner Strasse 66, D-7140 Ludwigsburg (DE)**
Erfinder: **Etzrodt, Günther, Dr. Dipl. Chem., Egmontweg 15, D-7000 Stuttgart 80 (DE)**
Erfinder: **Dimroth, Peter, Dr. Dipl. Chem., Collinstrasse 5-24-11, D-6800 Mannheim (DE)**
Erfinder: **Ostertag, Werner, Dr. Dipl. Chem., Oberer Bergelweg 2, D-6718 Grünstadt (DE)**
Erfinder: **Wienand, Henning, Dr. Dipl. Chem., Kornstrasse 64a, D-6831 Neulussheim (DE)**

(74) Vertreter: **Kinzel, Klaus, Dr. et al, BASF Aktiengesellschaft Patentabteilung, D-6700 Ludwigshafen (DE)**

# Beschreibung

Bleichromat-Pigmente, insbesondere sogenannte Chromgelbe, die bis zu Temperaturen von 300°C und darüber temperaturbeständig sind, werden in zunehmendem Masse für die Kunststoffeinfärbung benötigt. Dies ist darauf zurückzuführen, dass das bisher gebräuchliche Gelb-Pigment bei der Einfärbung von Kunststoffen aus toxikologischen Gründen vielfach nicht mehr eingesetzt werden darf. Um in gebräuchliche Kunststoffe eingearbeitet werden zu können, sollte das Pigment für eine Dauer von mindestens 5 Minuten bei 325°C thermostabil sein. Unter Thermostabilität wird üblicherweise verstanden, dass nach schonender Einarbeitung in den betreffenden Kunststoff beim Vergleich mit der nicht erhitzten Kunststoffausfärbung ΔE-Werte, gemessen nach dem CIELAB-System, von nicht grösser als 3 auftreten. Es sind bereits Verfahren bekannt geworden, die eine Thermostabilität von Bleichromat- und bleichromathaltigen Pigmenten erreichen sollen. Diese Verfahren gehen davon aus, dass man die Oberflächen der Bleichromat-Pigmente durch einen Überzug eines reduktionsunempfindlichen Materials schützt, um farbtonverändernde Reaktionen während der Kunststoffschmelze auszuschliessen. Um dies zu gewährleisten, kann man mehr oder weniger dicke Schichten vornehmlich von SiO₂-Überzügen auf dem Pigment anbringen. Aber selbst Überzüge an SiO₂, die bis 40 Gewichtsprozent am Gesamtgewicht des überzogenen Pigmentes ausmachen, sind unwirksam, wenn diese Überzüge nicht dicht und gleichmässig das darunter liegende Chromat-Pigment vor störenden Einflüssen während der Schmelze des Kunststoffes schützen. Zudem ist es verständlich, dass dicke Überzüge an farblosem SiO₂ oder anderen nicht farbigen Schichten die Farbkraft der Pigmente in unerwünschter Weise verringern.

Es hat sich gezeigt, dass die bekannten Verfahren zur Aufbringung eines SiO₂-Überzuges auf chromathaltige Pigmente nicht immer den gewünschten Erfolg bringen, da die Herstellung von dichten und gleichmässigen Überzügen hinsichtlich der Prozessführung schwierig ist, da bereits geringe Abweichungen innerhalb der Herstellungsbedingungen, insbesondere bezüglich des pH-Wertes oder der Konzentration der Pigmentsuspension, zu einer nicht gleichmässigen Abscheidung auf der Pigmentoberfläche führen. Die Schwierigkeit der Aufbringung von SiO₂-Überzügen auf Bleichromat-Pigmente dürfte u.a. dadurch bedingt sein, dass nur in einem pH-Bereich in der Nähe des Neutralpunktes eine Schädigung des Farbpigmentes vermieden werden kann. Andererseits neigt gerade in diesem pH-Bereich Kieselsäure dazu, Si−O−Si−Brücken zu bilden bzw. zu polymerisieren und sich dadurch der Bildung von festhaftenden Schichten zu entziehen.

Die vorliegende Erfindung ging daher von der Aufgabenstellung aus, temperaturstabile Bleichromat-Pigmente bzw. bleichromathaltige Pigmente sowie ein Verfahren zu ihrer Herstellung zur Verfügung zu stellen, die bei hervorragender Temperaturstabilität eine Beschichtung von SiO₂ aufweisen, die die Farbstärke weniger beeinflusst als bisher, wobei ein neues Herstellungsverfahren die Möglichkeit bietet, eine dicht zusammenhängende Beschichtung der Pigmente von SiO₂ in zuverlässiger und gut reproduzierbarer Weise aufzubringen. Entsprechende Bleichromat- bzw. bleichromathaltige Pigmente mit einer aufgefällten siliciumdioxidhaltigen Beschichtung werden erfindungsgemäss dadurch hergestellt, dass man eine wässerige Pigmentsuspension des Bleichromat- bzw. bleichromathaltigen Pigmentes mit einer wässerigen Lösung von Magnesiumsilicofluorid (MgSiF₆) ein- oder mehrmals vermischt, wobei der pH-Wert 4,5 bis 9,5 beträgt und eine Temperatur von 50 bis 90°C eingehalten wird. Nach Abtrennung des beschichteten Pigmentes erfolgt die Weiterverarbeitung in üblicher Weise. Selbstverständlich können anstelle der MgSiF₆-Lösung auch andere Salzlösungen verwendet werden, die in der Lösung Magnesium- bzw. SiF₆-Ionen in dissoziierter Form enthalten. Unter Bleichromat- bzw. bleichromathaltigen Pigmenten werden im vorliegenden Fall die einfachen Chromate des Bleis, aber auch Mischkristalle mit Bleisulfat und/oder Bleimolybdat verstanden. Obwohl die verschiedenen Vertreter dieser Pigmentgruppen dem erfindungsgemässen Verfahren zugänglich sind, sind die gelben Chromatpigmente für die Einfärbung von Kunststoffen von besonderem Interesse. Die Menge des für die Temperaturstabilisierung notwendigen Magnesiumsilicofluorids ist abhängig von der freien Oberfläche des eingesetzten Bleichromatpigmentes und kann wegen der jeweils unterschiedlichen, die Grösse der freien Oberfläche beeinflussenden Herstellungsweise nicht exakt eingegrenzt werden. Im allgemeinen werden jedoch Bleichromat- bzw. bleichromathaltige Gelbpigmente mit einer BET-Oberfläche von 8 bis 10 m²/g die gewünschte Thermostabilität von bis über 320°C aufweisen, wenn sie einen Magnesiumgehalt von 0,5 bis 10%, einen Siliciumgehalt von 2 bis 25% und einen Fluorgehalt von 0,3 bis 20%, bezogen auf das Gesamtgewicht des beschichteten Pigmentes, enthalten. Soweit auf besonders farbstarke thermostabile Produkte Wert gelegt wird, zeigen diese Analysenwerte von weniger als 5% Magnesium, 6% Silicium und 6% Fluor. Die zu beschichtenden Pigmente können in reiner Form (sogenannte nackte Pigmente), aber auch versehen mit qualitätsverbessernden Zusätzen, wie z.B. Antimon, Silicat, Aluminiumhydroxid und ähnlichem, verwendet werden. Soweit Pigmente verwendet werden, die bereits etwa durch Silicat, Antimon und ähnlichem, z.B. gegen die Einflüsse von Licht und SO₂ vorstabilisiert sind (z.B. hergestellt nach DBP 1 224 858), kann es zweckmässig sein, den Zusatz von Magnesiumsilicofluorid-Lösung nicht einmal, sondern mehrmals vorzunehmen. Man kann dann etwa so verfahren, dass die erste Beschichtung des sogenannten nackten Produktes in erfindungsgemässer Weise erfolgt, danach die qualitätsverbessernden Zusätze, z.B. von Antimon und Silicat, durchführt und letztlich eine zweite erfindungsgemässe Beschichtung aufbringt. In einem typischen Fall wird bei der Beschichtung so vorgegangen, dass die Suspension von Bleichromat- bzw. bleichromathaltigen Pigmenten, die nach der Herstellung des Pigmentes in einem pH-Bereich zwischen 6 und 7 vorliegt, mit einer 10%igen wässerigen Lösung von Magnesiumsilicofluorid, unter gleichzeitiger Zuführung einer 10%igen Alkali-, Ammoniakoder Wasserglas-Lösung, unter Rühren vermischt wird. Die Zeiten für die Zugabe der Lösungen liegen zwischen 0,5 und 3 Stunden. Die Temperatur wird während der Zeit der Vermischung zwischen 50 und 95°C, zweckmässigerweise zwischen 65 und 95°C, gehalten. Anschliessend wird bei Temperaturen von 70 bis 95°C ca. 1 Stunde nachgerührt, wobei der pH-Wert in der Nähe des Neutralpunktes ± 0,3 gehalten wird. Anschliessend wird das Pigment filtriert, gewaschen und getrocknet. Besitzt die Ausgangssuspension herstellungsbedingt einen basischen pH-Bereich, so wird sie durch Zugabe von Säuren, z.B. verdünnter Schwefelsäure, die bereits mit $MgSiF_6$ versetzt sein kann, zunächst auf einen pH-Wert von 6 bis 7 gebracht, bevor man, wie vorstehend beschrieben, erfindungsgemäss verfährt.

Es wird vermutet, dass durch die erfindungsgemässen Massnahmen durch die Anwesenheit von Magnesiumsilicofluorid die Ausbildung von grösseren Aggregaten mit $Si-O-Si$-Bindungen, wie im Falle der ausschliesslichen Verwendung von Salzen der Ortho-Kieselsäure, weitgehend verhindert wird und dadurch dichtere und fester anhaftende Beschichtungen erreicht werden. Die aufgebrachte Beschichtung ist siliciumdioxidhaltig und röntgenamorph. An welchen Stellen der Beschichtung Magnesium-Ionen und Fluor-Ionen eingebaut sind, ist bislang nicht festgestellt worden.

Auch kann die relative Konzentration der Elemente Magnesium, Fluorid sowie der Silicatreste innerhalb der Beschichtung in weiten Grenzen schwanken. So hängt z.B. der Fluorgehalt der Beschichtung von der Konzentration der Suspension und den Hydrolysebedingungen für die $SiF_6^{--}$-Moleküle ab sowie von den Salzen, wie z.B. Natriumfluorid, die unabhängig von dem erfindungsgemässen Verfahren in bekannter Weise vor der Herstellung der Bleichromat-Pigmente verwendet werden können.

Der Vorteil des erfindungsgemässen Verfahrens liegt in der Tatsache, dass in zuverlässiger Weise dichte zusammenhängende Beschichtungen erreicht werden, die das Produkt thermostabil machen. Infolge der dichten zusammenhängenden Beschichtung ist es auch möglich, vergleichsweise weniger Silicat für die Beschichtung zu verwenden, wodurch die Farbstärke der resultierenden beschichteten Pigmente gegenüber dem Ausgangsmaterial nur wenig verändert wird.

Das erfindungsgemässe Verfahren ist aber auch erfinderisch. So war z.B. durch das DBP 1 253 384 ein Verfahren zur Herstellung von gegen schweflige Säure beständigen Molybdatrot- bzw. Molybdatorange-Pigmenten bekannt geworden, das dadurch gekennzeichnet ist, dass die Pigmente nach der Fällung mit wasserlöslichen Antimon(III)-Verbindungen und löslichen Salzen der Kieselfluorwasserstoffsäure oder mit wasserlöslichen Salzen, die Antimon(III)ionen, Fluorionen und Silicationen ergeben, versetzt und danach mit Alkalien auf einen pH-Wert von 6 bis 8,5 eingestellt werden. Die in dem genannten Verfahren benötigten wasserlöslichen Fluoridionen, die z.B. auch durch Hydrolyse von Salzen der Silicofluorwasserstoffsäure entstehen, werden bei diesem Verfahren, wie beschrieben, weitgehendst eliminiert, und ihre Anwesenheit im Endprodukt ist für die $SO_2$-Beständigkeit nicht unbedingt zwingend.

Es war daher überraschend und nicht vorausschaubar, dass die Verwendung von Magnesiumsilicofluorid nach dem erfindungsgemässen Verfahren und die Tatsache, dass in Produkten gemäss diesem Verfahren immer Fluorionen nachweisbar sind, die Thermostabilität verbessert werden kann. Im Gegensatz zu Produkten nach dem erfindungsgemässen Verfahren zeigen Produkte nach DBP 1 253 384 keine Verbesserung der Thermostabilität. Ähnliches gilt auch für das DBP 1 224 858, das sich auf ein Verfahren zur Verbesserung der Licht- und Wetterechtheit von Chromgelben bezieht. In den beiden genannten Fällen kann demnach auch eine zusammenhängende dichte Beschichtung mit Silicatelektronen mikroskopisch nicht nachgewiesen werden. Andererseits können aber Produkte, wie sie nach DBP 1 253 384 und DBP 1 224 858 erhalten werden, als Ausgangsprodukte für das erfindungsgemässe Verfahren eingesetzt werden und erreichen dadurch die gewünschte Thermostabilität, die sie vordem nicht beinhalteten.

Wie vorstehend bereits ausgeführt, ist es auch möglich, die erfindungsgemässe Beschichtung zweimal aufzubringen. Dies bedeutet bei den genannten Produkten eine erste Beschichtung auf das nackte Pigment, danach Durchführung der Verfahren jeweils gemäss den genannten Patenten und letzlich eine zweite Beschichtung wiederum erfindungsgemäss.

*Beispiel 1a*

*Herstellung von nicht belegtem (nacktem) Bleichromatpigment-Ausgangsprodukt*

Eine Lösung von 12,4 kg Bleinitrat, $Pb(NO_3)_2$, in 160 l Wasser wird unter Rühren gelöst. Dann wird über eine Dauer von 15 Minuten eine 20°C warme wässerige Lösung, bestehend aus 6,0 kg Natriumchromat, $Na_2CrO_4$, 1 kg $Na_2SO_4$, 1,0 kg NaCl in 30 l Wasser unter Rühren zugeführt. Die Suspension mit einem pH von 4,5 bis 6,3 wird über eine Dauer von 10 bis 20 Minuten auf 90 ± 5°C erwärmt und unter Rühren 1 Stunde bei dieser Temperatur gehalten.

*Beispiel 1b*

*Herstellung eines licht- und SO₂-stabilisierten Bleichromatpigment-Ausgangsproduktes*

In die nach Beispiel 1a gefällte $PbCrO_4$-pigmenthaltige Suspension werden 0,058 kg $Al_2(SO_4)_3 \cdot 14 \ H_2O$, gelöst in $H_2O$ (Dichte 1,3)

und 0,038 kg $Na_2SO_4$, gelöst in 0,9 l $H_2O$, unter Rühren bei 70°C zugegeben. Anschliessend wird der pH-Wert mit einer 10%igen $NaHCO_3$-Lösung auf pH 6,0 eingestellt. Daraufhin wird 0,1 l einer kalten verdünnten Wasserglaslösung (d=1,38) unter Rühren zugefügt, bis der pH-Wert bei einer Temperatur von 60°C 8,9 bis 9,1 beträgt.

Anschliessend wird der Suspension eine Lösung, bestehend aus 0,066 kg $Sb_2O_3$ und 0,25 kg 3%iger HCl in 0,2 l $H_2O$ unter Rühren zugeführt, wobei der pH-Wert der Suspension mit 5%iger wässeriger NaOH auf pH 6,0 bis 6,8 gehalten wird. Der End-pH wird schliesslich auf 6,8 eingestellt.

Das Pigment enthält neben Pb, $CrO_4$ und $SO_4$ 0,3% Al, 2,4% Si und 4% Sb.

*Beispiel 2:*

100 g des nach Beispiel 1b hergestellten Bleichromats werden in 1330 g Wasser eingeführt und mit verdünnter Schwefelsäure auf pH 6,5 eingestellt. Dann wird die Suspension auf 75°C erhitzt. Anschliessend wird über eine Zeitdauer von 25 Minuten eine Lösung von 30 g $MgSiF_6 \cdot 6 H_2O$ in 270 g $H_2O$ unter Rühren eingeleitet und gleichzeitig 10%ige Natronlauge so zugegeben, dass der pH-Wert nicht unter 6,2 abfällt.

Die Suspension wird bei pH 6,2 und 75°C 1 Stunde lang nachgerührt. Dann wird filtriert, gewaschen und bei 105°C getrocknet.

Man erhält ein leicht dispergierbares Produkt, dessen Analysen neben Pb, Chromat und Sulfat 0,26% Al, 3,5% Sb, 4,5% Si, 3,3% Mg und 5,4% F enthält. Die elektronenmikroskopischen Aufnahmen (Vergrösserung 1:50 000) zeigen eine sehr homogene Beschichtung von 0,05 bis 0,08 Å (0,005 bis 0,008 nm) Dicke.

Die Farbstärke des Pigmentes ist gegenüber dem Ausgangspigment um 10% niedriger.

Die Prüfung der Thermostabilität ist in Tabelle 1 wiedergegeben.

*Beispiel 3:*

Herstellung eines temperaturstabilisierten Bleichromates unter Verwendung von nicht belegtem Bleichromatpigment.

100 g des nach Beispiel 1a hergestellten Bleichromatpigmentes werden in 1300 g Wasser eingerührt. Nach Einstellen des pH-Wertes mit verdünnter Schwefelsäure auf 6,2 wird die Suspension auf 70°C erhitzt und mit einer Lösung von 200 g $MgSiF_6 \cdot 6 H_2O$ in 1500 g $H_2O$ über 1 Stunde versetzt, wobei der pH-Wert durch Zugabe von 10%iger Natronlauge auf 7,1 angehoben wird. Dann wird 60 Minuten bei 70°C nachgerührt.

Anschliessend wird eine Lösung von 20 g Natronwasserglas ($Na_2O \cdot 3,25 SiO_2$) in 180 g $H_2O$ unter Rühren und der gleichzeitigen Zugabe von verdünnter Schwefelsäure so zugegeben, dass der pH-Wert bei 7,0 zu liegen kommt. Die Suspension wird 1 Stunde bei 70°C nachgerührt, heiss filtriert, mit Wasser gewaschen und getrocknet.

Man erhält ein leicht dispergierbares Produkt, dessen Analyse neben Blei, Chromat und Sulfat 5,8% Si, 9,8% Fluor und 1,1% Magnesium aufweist. Das Produkt hat eine freie Oberfläche von 9,5 m²/g (BET).

Aus elektronenmikroskopischen Aufnahmen geht hervor, dass das vorher unbelegte $PbCrO_4$-Pigment nach der Stabilisierung mit einer homogenen 0,06 bis 0,1 µm dicken Beschichtung versehen ist. Die Messung der Temperaturstabilität ist in Tabelle 1 wiedergegeben.

*Beispiel 4:*

100 g des nach Beispiel 1b hergestellten Bleichromates werden in 1330 g Wasser eingerührt und mit verdünnter Schwefelsäure auf pH 4,5 ± 0,5 gestellt. Unter Rühren wird die Suspension auf 75°C erhitzt. Anschliessend wird über eine Zeitdauer von 1 Stunde eine Lösung aus 80 g $MgSiF_6 \cdot 6 H_2O$ in 720 g $H_2O$ zugefügt. Gleichzeitig wird eine 10%ige NaOH-Lösung so zugegeben, dass der pH-Wert der Suspension bis pH 7 ansteigt.

Die Suspension wird 1 Stunde lang bei 75°C nachgerührt. Dann wird filtriert, gewaschen und bei 105°C getrocknet.

Man erhält ein leicht dispergierbares Produkt, in dem neben Pb, $CrO_4$ und $SO_4$ 0,26% Al, 3,4% Sb, 8,7% Si, 6,1% Mg und 13,0% F enthalten sind. Die Farbstärke des Produktes ist um 20% geringer als die des Ausgangsproduktes.

*Beispiel 5:*

100 g eines Molybdatrots, hergestellt nach Beispiel 1 des DBP 1 253 384, wird gemäss den Angaben des Beispiels 2 der vorliegenden Anmeldung behandelt. Man erhält ein Molybdatrot-Pigment, das sich hinsichtlich seiner Temperaturbeständigkeit ähnlich verhält wie das nach Beispiel 2 hergestellte Bleichromat.

Die Prüfung der Thermostabilität ist in Tabelle 1 wiedergegeben.

*Messung der Thermostabilität der Proben*

Einprozentige Mischungen aus Bleichromat und Kunststoffgranulat (high density Polyethylen) werden durch einstündiges Rollen in einer Glasflasche auf einem Rollwerk hergestellt. Anschliessend wird die Mischung in den Einfülltrichter einer Schneckenspritzgussmaschine eingefüllt. Das eingefüllte Material wird auf Temperatur (320°C) gebracht und verweilt dann weitere 5 Minuten bei der eingestellten Temperatur. Dann wird die gesamte Füllung der Schneckenspritzgussmaschine zu Plättchen verspritzt.

Die Spritzlinge werden farbmetrisch nach DIN 6174 vermessen. Das Pigment gilt als thermostabil, wenn die koloristische Änderung zum Spritzling bei 270°C nicht grösser ist als $\Delta E = 3$, wobei der $\Delta E$-Wert Veränderungen des Kunststoffes mit einschliesst.

Tabelle 1 gibt die Thermostabilitäten der Proben wieder.

| Probe | Vers. 1a | Vers. 1b | Vers. 2 | Vers. 3 | Vers. 4 | Vers. 5 |
|-------|----------|----------|---------|---------|---------|---------|
| $\Delta E$ | 25 | 22 | 2,8 | 2,5 | 2,4 | 2,0 |

**Patentanspruch**

Verfahren zur Herstellung von farbstarken, temperaturstabilen Bleichromat- oder bleichromathaltigen Pigmenten, die mit einer aufgefällten siliciumdioxidhaltigen Beschichtung versehen sind, dadurch gekennzeichnet, dass man eine wässerige Pigmentsuspension ein- oder mehrmals mit einer wässerigen MgSiF$_6$-Lösung vermischt, wobei der pH-Wert von 4,5 bis 9,5 und eine Temperatur von 50 bis 95°C eingehalten wird, wonach wie üblich das Pigment abgetrennt und aufgearbeitet wird.

**Revendication**

Procédé de préparation de pigments de chromate de plomb, ou contenant du chromate de plomb, stables à la température et à fort pouvoir colorant, qui sont munis d'un enduit appliqué contenant du bioxyde de silicium, caractérisé par le fait que l'on mélange une suspension aqueuse de pigment, une ou plusieurs fois, avec une solution aqueuse de MgSiF$_6$, en maintenant un pH de 4,5 à 9,5 et une température de 50 à 95°C, après quoi le pigment est, comme d'habitude, séparé et traité.

**Claim**

A process for the preparation of thermally stable lead chromate or lead-chromate-containing pigments which have a high color strength and are provided with a precipitated coating containing silicon dioxide, wherein an aqueous pigment suspension is mixed one or more times with an aqueous MgSiF$_6$ solution, the pH being maintained at 4.5-9.5 and the temperature at 50-95°C, after which the pigment is separated off and worked up in a conventional manner.